Europäisches Patentamt

European Patent Office

Office européen des brevets

(19)

(11) Publication number: **0 248 206 B1**

(12) **EUROPEAN PATENT SPECIFICATION**

(45) Date of publication of patent specification: **08.07.92**  (51) Int. Cl.⁵: **G11B 27/36**, G11B 20/18, G11B 5/596

(21) Application number: **87106186.7**

(22) Date of filing: **28.04.87**

(54) **Error communication decoder for direct access storage device.**

(30) Priority: **27.05.86 US 866673**

(43) Date of publication of application:
**09.12.87 Bulletin 87/50**

(45) Publication of the grant of the patent:
**08.07.92 Bulletin 92/28**

(84) Designated Contracting States:
**DE FR GB**

(56) References cited:
**EP-A- 0 104 941**
**US-A- 4 402 025**
**US-A- 4 488 187**
**US-A- 4 593 375**

(73) Proprietor: **International Business Machines Corporation**
**Old Orchard Road**
**Armonk, N.Y. 10504(US)**

(72) Inventor: **Kerwin, Gregory John**
**627 Woodhill Court**
**RO. MN 55901(US)**
Inventor: **Lepage, John Donald**
**1401 Windsor Chase Drive SW**
**RO. MN 55902(US)**
Inventor: **Weispfenning, James Michael**
**4203 Manorwoods Drive NW**
**RO. MN 55901(US)**

(74) Representative: **Colas, Alain**
**Compagnie IBM France Département de Propriété Intellectuelle**
**F-06610 La Gaude(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 248 206 B1

**Description**

The invention relates to data storage devices and more particularly to communication of errors from arm electronics in a storage device to circuitry not located on the arm.

As computer related circuitry continues to shrink in size, more function in information handling systems has migrated away from central processing circuitry. In disk drive devices, electronics have been moved gradually from host processors, to drive controllers, and recently to the actual transducer supporting actuator. Such electronics on the actuator have been referred to as arm electronics modules. The arm electronics modules in many cases, control the read and write process on the storage media. Error detection is also performed by the arm electronics modules.

Other functions of the arm electronics module include safety, and fieldreplaceable unit (FRU) isolation. Safety involves detecting error conditions that can destroy customer data. FRU isolation is detecting error conditions to isolate errors to a fieldreplaceable unit.

One problem encountered in moving function to the actuator in disk drives is that the actuator must move quickly and predictably to place data detecting heads in positions to detect desired data. Since tracks of data on the media are getting closer and closer together, precise control of the actuator movement is crucial. As forces, such as cable stiffness, or bias, act against movement of the actuator, it is more difficult to control the movement of the actuator.

In past attempts to solve the above problem, communication lines have been routed via flexible cabling from the actuator to the exterior of headdisk enclosures. Thus, the cable flexes with the movement of the actuator. However, since the cable contains at least one communication line for each type of information to be communicated, the cable loses some of its flexibility with the addition of communication lines required to control the function and communicate errors. The loss of flexibility creates drag on the actuator and increases the amount of drive required to move the actuator with the desired speed and accuracy. An increase in the drive required results in an increase in the strength of voice coil magnets used to drive the actuator and increases the weight, cost and stray electromagnetic radiation from the magnets.

A further attempt to solve the problem has been to sacrifice reliability of the cable by making the conductors within the cable thinner. Thinner conductors however lead to an increase in the failure rate of the cable because of their relentless flexing.

Error signals from disk drive arm electronics on a transducer supporting actuator are decoded such that they require fewer communication lines than the number of potential error signals. A plurality of error detection circuits, each having an output indicative of an error condition or an error free condition are included in the arm electronics. An error decode circuit in the arm electronics receives outputs from the error detection circuits. The error decode circuit decodes the outputs from the error detection circuits to a decode output having less output lines than there are error detection circuit outputs. One set of conditions on the output lines of the decode circuit is representative of error free operation of the disk drive. The other sets of conditions on the output lines of the decode circuit are representative of error conditions.

In the preferred embodiment, eight error condition indications are coupled to the error decode circuit which decodes the eight indications into a three bit code. The three bit code uses only three communication lines off the actuator as opposed to seven in the prior art. This reduction (greater than a 50 percent reduction in the number of error condition communication lines) in the number of communication lines relieves the actuator of the burden of overcoming the bias of four extra communication lines when delicately positioning transducer heads supported by the actuator. This result in an enhancement of the actuator response time.

More particularly, the object of the invention is to provide a magnetic disk drive as defined in claim 1.

Description of the Figures

Fig. 1 is a partial cutaway, elevation of a disk drive device showing arm electronics and a flexible cable coupled to the arm electronics;
Fig. 2 is a combined block circuit diagram of the arm electronics and its interface to the flexible cable of Fig. 1, and to the disk drive storage media; and
Fig. 3 is a block diagram of a decode circuit in the arm electronics of Fig. 2.

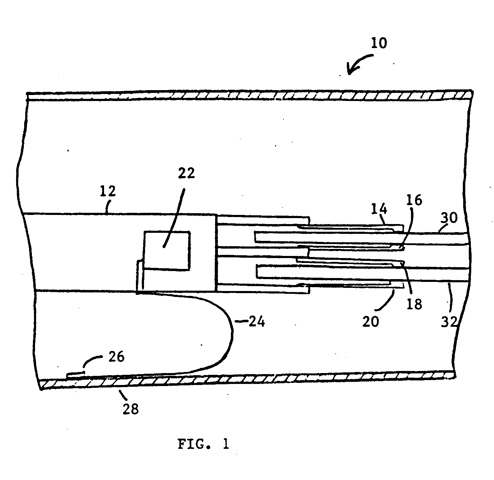

A disk drive device is indicated generally at 10 in Fig. 1, and comprises an actuator 12, supporting a plurality of data transducing heads 14, 16, 18 and 20. Arm electronics indicated at 22 are supported by the actuator 12 and provide various functions such as controlling reading and writing of data by heads 14-20, amplification of write current, error detection and safety related functions. A flexible connector 24 coupled to the arm electronics 22 communicates signals, including a three bit error detection signal, from arm

2

electronics 22 to circuits not located on the actuator. The connection to such circuits is indicated at 26, and may comprise a pass through device for communicating the signals outside of a disk enclosure 28 or circuits within the enclosure 28. Further means of communication, such as optical communication devices communicating via light directed parallel to the movement of the actuator to stationary receptors such as lenses are also contemplated.

Further detail of the disk drive device of Fig. 1 can be found in European Patent application No. 86113665.3. This application describes the movement of actuator 12 parallel to the surfaces of disks 30 and 32 on rollers. Arm 12 is driven by a voice coil. Arm 12 moves the heads about surfaces of media disks 30 and 32 which store desired data. Media disks 30 and 32 are rotatably supported by a spindle assembly for moving the media disks under the heads 14-20.

As the actuator 12 moves, cable 24 flexes, but retains the curved shape (180 degree arc) indicated in Fig. 1. The forces acting on the actuator from cable 24 are a function of the mass and flexibility or bias of cable 24. The greater the bias of cable 24, the greater voice coil power required to properly accelerate and decelerate actuator 12 such that the heads 30 and 32 are rushed delicately to the desired track of data on the high track density disks 30 and 32. The greater the flexibility of cable 24, the less energy required to move actuator 12. One further affect flexing of cable 24 has is to inject vertical forces tending to disturb the flying height of heads 14-20 on media. If cable 24 has less flexibility than desired, it could potentially cause catastrophic head crashes. Flexibility of cable 24 is a function of the number of communication paths in the cable, and their thickness.

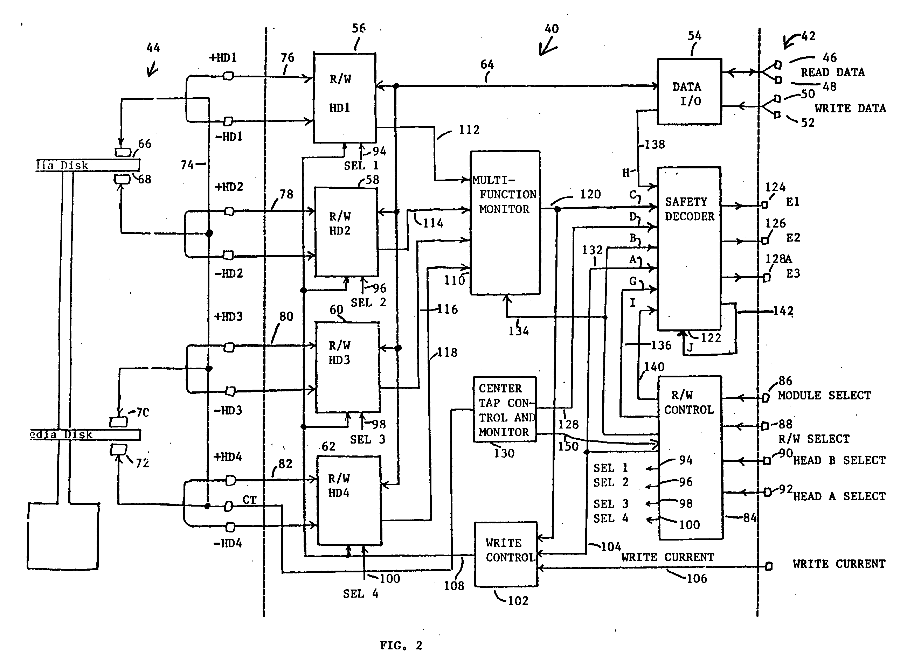

A reduction in the number of communication lines required in cable 24 is provided by arm electronics module 22 shown in further detail generally at 40 in Fig. 2. The right side of module 40, as shown, is coupled to signal lines of the flexible cable indicated generally at 42. The left side of arm electronics module 40 is coupled to lines leading to transducer heads indicated generally at 44.

There are twelve 12 cable lines indicated at 42 in the embodiment of Fig. 2. A pair of read data lines 46 and 48 carry data read from the media off of the actuator as a differential signal. Similarly, a pair of write data lines 50 and 52 carry differential write signals. The read and write signal lines are coupled to a data I/O block 54.

The data I/O block 54 provides buffering of the data and communicates with a plurality of read/write circuits 56, 58, 60, and 62 via a line 64. The read/write circuits each control the operation of corresponding transducer heads 66, 68, 70, and 72. Each head 66-72 comprises standard bifilar windings having center taps indicated by line 74. The read/write circuits provide amplification of read signals from the head on lines 76, 78, 80, and 82 respectively. They also control current on said lines used for writing data.

The read/write circuits are controlled by a read/write control block 84 which receives four control signals on cable lines labeled, module select 86, read/write select 88, head B select 90, and head A select 92. The read/write control block 84 provides four select signals on lines 94, 96, 98 and 100 which are labeled SEL 1, SEL 2, SEL 3, and SEL 4. The select signal lines are actually coupled to the read/write circuits 56-62 as indicated by the identically labeled lines 94-100 shown entering the read/write circuits. The four select signals 94-100 are generated from the head A and head B select signals 92 and 90.

The read/write select signal on line 88 is buffered by read/write control block 84 and then coupled to a write control block 102 by a line 104. Write control block 102 also receives a write current signal on a line 106, which is also a cable line. Write control block 102 provides write current to the read/write circuits on a line 108.

A multifunction monitor 110 is coupled to read/write circuits 56-62 by lines 112, 114, 116, and 118 respectively. The multifunction monitor 110 monitors the state of the read/write circuits as indicated on lines 112-118. Only one read/write circuit should be active at a time. If more than one is active, or if one is active, and the mode select line 86 indicates that none should be active, an error condition exists. This error condition is output on a line 120 (C) to a safety decoder block 122. It is also communicated to write control block 102 for safely blocking write current to the read write circuits so that no harm is done, or no more data lost by writing simultaneously to more than one disk or writing without having data to be written.

Safety decoder block 122 receives signals on eight lines, identified by letters A, B, C, D, G, H, I and J. These signals are decoded onto three error detection signal output lines, 124, 126 and 128A which are labeled E1, E2 and E3. The states of lines E1, E2 and E3 represent eight different conditions of the arm electronics 40 and transducer heads 44. Thus, the eight signal lines have been reduced to three lines which comprise communication lines in the cable. The dilemma between having thin unreliable communication lines, but ease of actuator movement versus thick reliable cabling, but difficult actuator movement has been resolved by reducing the number of communication lines in the cable. The lines may now be thicker and more reliable without sacrificing ease of actuator movement.

A further signal line 128 (D) originates from a center tap control and monitor block 130. This block controls a voltage level on line 74 as a function of the read/write select control signal on line 88, and monitors the amount of current on the line 74. When the amount of current is inappropriate for one of two possible states of the center taps, an error condition D is communicated to the safety decoder 122.

Line A, indicated at 132, is essentially a pass through of the read/write select signal on line 88 after it is buffered by read write control block 84. Line A is used to indicate that the read/write select signal is being received by the arm electronics module, and thus, that the cable communication line is intact. Line B, indicated at 134 similarly monitors module select line 86.

Line C, indicated at 120, again, is provided by multifunction monitor 110 as a function of bias current resulting from power being supplied to individual read/write circuits 56-62. Line 134 is coupled to multifunction monitor 110 to inform the multifunction monitor 110 that the arm electronics module is selected, or not selected. If selected, multifunction monitor 110 checks for the poweron bias current of more than one read/write circuit 56-62, which is an error condition. If not selected, multifunction monitor 110 checks for operation of any of the read/write circuits 56-62 and raises an error on line 120 (C).

Line D, indicated at 128, is representative of the output of the center tap control and monitor block 130. The value of Line D is compared in the safety decoder to guarantee that the head windings in the transducer heads are in the appropriate mode of operation for whether a read or a write is being performed. Center tap control and monitor block 130 monitors the integrity of the heads. Read mode errors are detected in the form of heads being shorted to high and low voltages and ground. Also, the current into and out of the node is monitored for its deviation above a maximum expected 1.5 milliamps. Write mode errors are also monitored and include the above head shorting. A write centertap current greater than 100 milliamps out of or into the node will also be an error condition. A guaranteed no error condition for write mode occurs when the write centertap current is greater than 16 milliamps out of the node and less than 60 milliamps. While in the deselected mode, the centertap error monitor 130 functions as if in the read mode. That is, a deselect condition forces the centertap low, and thus into the read mode, allowing detection of the read mode errors.

Line G, indicated at 136, represents the integrity of control lines 86-92 as indicated by sensing circuitry in read/write control block 84. The circuitry indicates an error when any of the four lines are open. It also provides an indication if any of the lines are shorted to a power supply or ground in a conventional manner.

Line H, indicated at 138, provides an indication of the data lines 46-52. An error is raised when either of the differential read data lines is open, shorted to ground or shorted to a +5 volt power supply. Circuitry suitable for such detections is described in European Patent Application No. 0871009254.

Line I, indicated at 140, provides and indication |verifies| that the centertap voltage echoes the expected value based on the state of the read/write select line 88. The read/write select line 88 is compared at 84 with line 150 from centertap error monitor 130 to arrive at the state of line 140.

Line J, indicated at 142, is representative of the integrity of the error lines 124-128A. Integrity circuitry within safety decoder 122 monitors the condition of the three driven error lines 124-128A (E1, E2, and E3). The error lines are checked for open, short to power supply of +5V, short to ground, and short to -5V.

Since the condition of the disk drive is determined in part by the state of the three error lines, all error lines are driven low when there is an error line integrity problem. This is done since any of the lines may be shorted to a positive supply (a no error state), or any of the lines may be open (thus causing the receiver to float to an up, or no error state.)

The logic states for the errors represented on the preceding lines is indicated in the following Table 1.

TABLE 1

| LINE | HIGH STATE | LOW STATE |
|---|---|---|
| A: READ/WRITE SELECT LINE MONITOR | READ MODE | WRITE MODE |
| B: MODULE SELECT LINE MONITOR | STANDBY | MODULE SELECT |
| C: MULTIFUNCTION DETECTOR MONITOR | MULTIFUNCTION ERROR | NO MULTIFUNCTION ERROR |
| D: CENTERTAP ERROR MONITOR | CENTERTAP ERROR | NO CENTERTAP ERROR |
| G: CONTROL LINE INTEGRITY MONITOR | CONTROL LINE INTEGRITY ERROR | NO CONTROL LINE INTEGRITY ERROR |
| H: DATA LINE INTEGRITY MONITOR | DATA LINE INTEGRITY ERROR | NO DATA LINE INTEGRITY ERROR |
| I: CENTERTAP MONITOR | WRITE ECHO | READ ECHO |
| J: ERROR LINE INTEGRITY MONITOR | ERROR LINE INTEGRITY ERROR | NO ERROR LINE INTEGRITY ERROR |

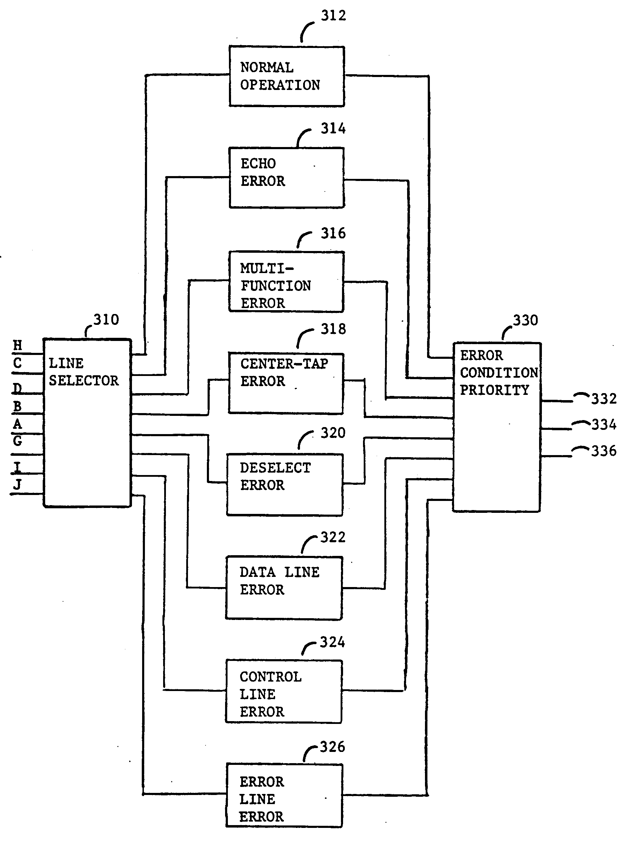

The logic in safety decoder 122 is shown in greater detail in Fig. 3. Each of the signals on lines H, C, D, B, A, G, I, and J are provided to a line selector 310. Line selector 310 provides the appropriate signals to eight logic blocks 312, 314, 316, 318, 320, 322, 324, and 326 which perform predetermined logic operations to provide specific three bit codes for communication over the flexible cable.

During normal operation, normal operation block 312 provides the code E1 = 1, E2 = 1, and E3 = 1. In the module selected mode (-B), errors C, D, G, H, J or an echo error do not exist. In the module deselected mode (B), errors C, D, G, H, or J do not exist. Thus, the logic equation implemented by block 312 is: ((-B) and ((A AND -I) OR (-A AND I))) AND (-C AND -D AND -G AND -H AND -J) OR (B AND -C AND -D AND -G AND -H AND -J). The equation is equivalently written in the form: (-B)(A(-I) + (-A)I)(-C)(-C)(-G)(-H)(-J + B(-C)(-D)(-G)(-H)(-J)

where the "-" symbol is used for the logical operator, NOT, the " + " symbol for the operator, OR, and the logical operator, AND being represented by letters being adjacent one another. As usual, the order of operation is AND before OR except as changed by parentheses.

An echo error block 314 implements the equation: (-B)(AI + (-A)(-I))(-J). An echo error is indicated when the expected voltage of the centertap does not agree with the monitored input state of the read/write select line, and no error J exists. This implies that a failure has occurred in the module select circuitry or in the centertap circuitry. The code provided is "011".

A multifunction error block 316 indicates when the module is in the selected mode, no echo error exists, no error line integrity error exists, and a multifunction error is present. The equation is: (-B)(A(-I) + (-A)I)(-J)C, which when true, results in a code of "100".

Centertap errors are processed by centertap error block 318 according to the equation: (-B)(A(-I) + (A)I)(-C)(-J)D, and resulting code: "101". A centertap error is indicated when the module is in the selected mode, no echo error exists, no multifunction error exists, no error line integrity error exists, and a centertap error is present.

A deselect error is handled by deselect error block 320. When the equation: B(C + D + G + H)(-J), is TRUE, the code "110" is provided. A deselect error indication occurs when the module is in the deselected mode, and at least one of the C, D, G or H, type errors exist.

A data line integrity error block 322 indicates by code "001" when the module is in the selected mode, no echo error exists, no multifunction error exists, no centertap error exists, no line integrity error exists, and a data line integrity error does exist. The equation is: (-B)(A(-I) + (-A)I)(-C)(-D)(-J)H,

A control line integrity error block 324 implements the equation: (-B)(A(-I) + (-A)I)(-C)(-D)(-H)(-J)G. The resulting code is "010". A control line integrity error is indicated when the module is in the selected mode, no echo error exists, no multifunction error exists, no centertap error exists, no data line integrity error exists, no error line integrity error exists, and a control line integrity error exists.

An error line integrity error block 326 implements the equation: J, which when TRUE results in the code "000". An error line integrity error is indicated when the module is in the selected mode and an error line integrity error exists. While the connections between line selector 310 and blocks 312 -326 are shown as single lines, they represent a suitable number of connections to convey the signals required to implement the corresponding equations for each block.

The above error indications are communicated to an error condition priority block 330 which provides the code of the highest priority condition for communication over the flexible cable over lines 332, 334, and 336. Since several different error indications could be present on the seven error lines, the above equations are selected to sort out the most common error combinations for representation by the three bit error code. Error condition priority block 330 prioritizes the error signals in accordance with the following Table 2:

TABLE 2

| ERROR SIGNAL | CODE | PRIORITY |
|---|---|---|
| NO ERROR | 111 | 0 |
| ECHO ERROR | 011 | 5 |
| MULTIFUNCTION | 100 | 4 |
| CENTERTAP | 101 | 3 |
| DESELECT ERROR | 110 | N/A |
| DATA LINE INTEGRITY | 001 | 2 |
| CONTROL LINE ERROR | 010 | 1 |
| ERROR LINE INTEGRITY | 000 | 6 |

The codes help in identifying the source of the errors to a field replaceable unit. If the code corresponds to no error condition, there is little chance of error. Some of the field replaceable units include the disk enclosure (28 in Fig. 1), a channel card plugged on the side of the disk enclosure, a driver board located beneath the disk enclosure, and an attachment card also plugged on the side of the disk enclosure.

An error code of "110" gives a sure indication that replacement of the channel card will solve the problem. An error code of 101 indicates that it is most likely a centertap error which could be a head, arm electronics module, or flex cable problem. 96 percent of the time this error condition exists, replacement of the disk enclosure is warranted. 3 percent of such errors are attributable to the channel card, and 1 percent to the driver board. The same is true for the multifunction error code of "100".

An error code of "011", an echo error, indicates an arm electronics module failure. In 75 percent of the error code "010" cases, disk enclosure failure is indicated, 23 percent are channel card failure and 2 percent driver board failure.

A code of "001" indicates an open read data line of or an open or shorted write data line. Another possible cause is an open arm electronics error 1 line (line 124 in Fig. 2). The percentage chances that the error is attributable to a particular FRU are, 72 percent disk enclosure, 26 percent channel card, and 2 percent driver board.

Finally, a code of "000" indicates that one or more of the error lines are shorted. Thus attributing the error 90 percent of the time to the disk enclosure, 8 percent to the channel card and 2 percent to the driver board.

The above percentages are estimates designed to show that the error signals assist in identifying parts of the disk drive to replace. These can be used in conjunction with part cost information to provide cost efficient repair of the disk drives.

The invention helps identify the field replaceable unit which may be at fault for faulty operation of the disk drive. It does this with a reduction in the number of communication lines required in the flexible cable. It also opens the possibility of using on chip lasers in alternate embodiments to communicate the error conditions. This possibility arises because of the reduction in the number of lasers which would be required to fit on the actuator. Due to the increase in bandwidth inherent in optical communications, the three bit error condition could easily be serially transmitted, thus requiring only a single laser. Timing of such serial communication would have to be carefully controlled with the remaining cable signals. In yet a further alternative embodiment, error condition priority block 330 comprises common parallel to serial conversion circuitry. The three bit parallel signal is then serially transmitted over a single communication line.

While the invention has been described in detail, it will be appreciated by one skilled in the art that the communication method could be altered to arrive at equivalent methods of communicating from a disk drive actuator to offarm electronics. While only eight states or conditions have been described, it is clear that many more states could be communicated by the addition one or more error lines.

**Claims**

6

1. A magnetic disk (10) drive with a plurality of rotating data surfaces and an actuator (12) carrying a plurality of transducer heads (14, 16, 18, 20) for writing data on said data surfaces and reading data from said data surfaces comprising:

an electronic circuit module (22) mounted on said actuator;

a plurality of error detection circuits (84, 102, 130, 134), each having an output indicative of an error condition or an error free condition, included in said electronic circuit module (22);

said disk drive being characterized in that it comprises:

an error code circuit (122) on said electronic circuit module (22) which receives the n outputs from said error detection circuits, this error code circuit (122) comprising a circuit for predetermining n-bit codes corresponding to preselect error condition combinations and a circuit (330) for giving predetermined relative priorities to these codes representing error combination and outputting the codes having the highest priorities to an output comprising a plurality of output lines (124, 126 and 128A) which are fewer in number than the plurality of error detection circuits, wherein one set of conditions on said output lines indicates error free operation and other sets of condition on said output lines indicate respective ones of said error condition combinations.

2. The magnetic disk drive of claim 1 wherein, when said output lines are all active, an error free operating condition is indicated.

3. The storage unit of claim 2 and further comprising:

a flexible cable (24) coupled to the output lines of the error decode circuit for carrying the error condition signal on the output lines to circuitry stationary with respect to the actuator, said flexible cable having a plurality of electrical conductors therein for carrying signals.

4. The storage unit of claim 3 wherein the thickness and number of the conductors comprising the cable affects the movement of the actuator and the reliability of the cable, and the reduction in the number of error detection circuits outputs permits an increase in the reliability of the cable without adversely affecting the movement of the actuator.

5. The storage unit of claim 2, 3 or 4 wherein the error decode circuit provides the error condition signal as a function of the logical state of a plurality of the outputs of the error detection circuits.

6. The storage unit of claim 5 wherein the error decode circuit can provide more than one error condition signal and wherein the storage unit further comprises selection means coupled to the error decode circuit for selecting one of multiple error condition signals based on a predetermined priority.

**Revendications**

1. Unité de disque magnétique (10) ayant une pluralité de surfaces de données et un positionneur (12) portant une pluralité de têtes de transduction (14, 16, 18, 20) pour écrire des données sur lesdites surfaces de données et lire des donnés à partir desdites surfaces de données, comprenant:

un module de circuit électronique (22) monté sur ledit positionneur;

une pluralité de circuits de détection d'erreurs (84, 102, 130, 134) ayant chacun une sortie indiquant une condition d'erreur ou une condition dépourvue d'erreur inclus dans ledit module de circuit électronique (22);

ladite unité de disque étant caractérisée en ce qu'elle comprend:

un circuit de traitement de codes d'erreur (122) sur ledit module de circuit électronique (22) qui reçoit les n sorties provenant desdits circuits de détection d'erreurs, ce circuit de traitement de codes d'erreur (122) comprenant un circuit pour prédéterminer des codes à n bits correspondant à des combinaisons de conditions d'erreur présélectionnées et un circuit (330) pour donner des priorités relatives prédéterminées à ces codes représentant une combinaison d'erreurs et envoyer les codes ayant les plus grandes priorités sur une sortie comprenant une pluralité de lignes de sorties (124, 126 et 128A) dont le nombre est moins élevé que la pluralité de circuits de détection d'erreurs, dans lequel un ensemble de conditions sur lesdites lignes de sortie indique une opération dépourvue d'erreur et d'autres ensemble de conditions sur lesdites lignes de sortie indiquent des combinaisons respectives desdites combinaisons de conditions d'erreurs.

**2.** Unité de disque magnétique selon la revendication 1, dans lequel, lorsque lesdites lignes de sortie sont toutes actives, il est indiqué une condition d'opération dépourvue d'erreur.

**3.** L'appareil de stockage selon la revendication 2;
comprenant en outre:
un câble souple (24) couplé aux lignes de sortie du circuit de traitement de codes d'erreur pour transporter le signal de condition d'erreur sur les lignes de sortie vers les circuits stationnaires par rapport au positionneur, ledit câble souple comportant une pluralité de conducteurs électriques pour transporter les signaux.

**4.** Appareil de stockage selon la revendication 3, dans lequel l'épaisseur et le nombre des conducteurs constituant le câble affectent le mouvement du positionneur et la fiabilité du câble, et où la réduction du nombre des sorties des circuits de détection d'erreurs permet une augmentation de la fiabilité du câble sans affecter de façon négative le mouvement du positionneur.

**5.** Appareil de stockage selon l'une quelconque des revendications 2, 3, ou 4, dans lequel le circuit décodeur d'erreurs fournit un signal de condition d'erreur en fonction de l'état logique de plusieurs sorties des circuits de détection d'erreurs.

**6.** Appareil de stockage selon la revendication 5, dans lequel le circuit décodeur d'erreurs peut fournir plus d'un signal de condition d'erreur, et dans lequel l'appareil de stockage comprend en outre des moyens de sélection couplés au circuit décodeur d'erreurs pour sélectionner un parmi de multiples signaux de condition d'erreur basé sur une priorité prédéterminée.

**Patentansprüche**

**1.** Magnetplatten-Laufwerk (10) mit einer Mehrzahl rotierender Datenoberflächen und mit einem Stellglied (12), welches eine Mehrzahl von Wandlerköpfen (14, 16, 18, 20) zum Schreiben von Daten auf die Datenoberflächen und zum Lesen von Daten von den Datenoberflächen trägt, enthaltend:
einen an dem Stellglied angebrachten Elektronikschaltungsmodul (22),
eine Mehrzahl von Fehlererkennungsschaltungen (84, 102, 130, 134), die in dem Elektronikschaltungsmodul (22) enthalten sind und je einen Ausgang besitzen, der einen Fehlerzustand oder einen fehlerfreien Zustand anzeigt,
wobei das Laufwerk dadurch gekennzeichnet ist, daß es aufweist:
eine Fehlercodierschaltung (122) in dem Elektronikschaltungsmodul (22), welche die n Ausgänge von den Fehlererkennungsschaltungen empfängt, diese Fehlercodierschaltung (122) eine Schaltung zum Vorbestimmten von n-bit Codes enthält, welche vorbestimmten Kombinationen von Fehlerbedingungen entsprechen, und die eine Schaltung (330) enthält, welche diesen, Fehlerkombinationen repräsentierenden Codes vorbestimmte relative Prioritäten gibt und welche jene Codes, die die höchsten Prioritäten besitzen, an einen Ausgang ausgibt, der eine Mehrzahl von Ausgangsleitungen (124, 126 und 128 A) besitzt, deren Anzahl geringer ist, als die Mehrzahl der Fehlererkennungsschaltungen, wobei ein Satz von Zuständen auf diesen Ausgangsleitungen einen fehlerfreien Betrieb und andere Sätze von Zuständen auf diesen Ausgangsleitungen entsprechende der Fehlerzustandskombinationen anzeigen.

**2.** Magnetplatten-Laufwerk nach Anspruch 1, bei welchem ein fehlerfreier Betriebszustand angezeigt ist, wenn alle Ausgangsleitungen aktiv sind.

**3.** Speichereinheit nach Anspruch 2, die weiters enthält:
ein an die Ausgangsleitungen der Fehlerdecodierschaltung angeschlossenes flexibles Kabel (24), um das an den Ausgangsleitungen befindliche Fehlerzustandssignal zu einer bezüglich des Stellglieds stationären Schaltung zu führen, wobei das flexible Kabel eine Mehrzahl elektrischer Leiter zum Führen von Signalen besitzt.

**4.** Speichereinheit nach Anspruch 3, bei welcher die Dicke und die Anzahl der Leiter, aus welchen das Kabel besteht, die Bewegung des Stellgliedes und die Verläßlichkeit des Kabels beeinträchtigt, wobei die Verringerung der Anzahl der Ausgänge der Fehlererkennungsschaltungen eine Erhöhung der Verläßlichkeit des Kabels ermöglicht, ohne die Bewegung des Stellglieds ungünstig zu beeinflussen.

**5.** Speichereinheit nach einem der vorangehenden Ansprüche 2, 3 oder 4, bei welcher die Fehlerdecodierschaltung das Fehlerzustandssignal als eine Funktion des logischen Zustandes einer Mehrzahl der Ausgänge der Fehlererkennungsschaltungen liefert.

**6.** Speichereinheit nach Anspruch 5, bei welcher die Fehlerdecodierschaltung mehr als ein Fehlerzustandssignal liefern kann und wobei die Speichereinheit weiters eine an die Fehlerdecodierschaltung angeschlossene Auswahleinheit besitzt, um auf Grundlage einer vorbestimmten Priorität eines der mehrfachen Fehlerzustandssignale auszuwählen.

FIG. 1

FIG. 2

FIG. 3